# FASCICULE DE BREVET EUROPEEN

(11) **EP 4 438 218 B1**
(45) Date de publication et mention de la délivrance du brevet: **24.12.2025**
(21) Numéro de dépôt: 24166436.6
(22) Date de dépôt: 26.03.2024
(51) Int. Cl.: B23K 26/00, B22F 10/25, B23K 26/144, B23K 26/242, B23K 26/26, B23K 26/32, B23K 26/34, B23K 35/02, B23K 101/18, B23K 103/04

(54) **PROCEDE DE SOUDURE DE DEUX PIÈCES MÉTALLIQUES PAR FUSION LASER PUIS REFROIDISSEMENT AVEC INERTAGE PAR POUDRE**
VERFAHREN ZUM SCHWEISSEN VON ZWEI WERKSTÜCKEN DURCH LASERSCHMELZEN UND ANSCHLIESSENDE KÜHLUNG MIT PULVERINERTISIERUNG
METHOD FOR WELDING OF TWO METALLIC WORKPIECES BY LASER MELTING AND THEN COOLING WITH POWDER INERTING

(30) Priorité: 31.03.2023 FR 2303162
(43) Date de publication de la demande: 02.10.2024
(73) Titulaire: Commissariat à l'Energie Atomique et aux Energies Alternatives, 75015 Paris (FR)
(72) Inventeur: BRIZZI, Lucas, 91940 GOMETZ-LE-CHATEL (FR); FONDANT, Gilles, 50440 VAUVILLE (FR)
(74) Mandataire: Atout PI Laplace

(56) Documents cités:
- WO-A1-2022/165997
- US-A1- 2013 136 868
- US-A1- 2016 214 209
- US-A1- 2020 324 372

## Description

La présente invention se rapporte à un procédé de soudure de deux pièces métalliques par fusion puis refroidissement conformément au préambule de la revendication 1 (voir par exemple US 2020/324372 A1).

L'invention s'inscrit dans le domaine de la conformation des pièces métalliques pour l'industrie. Les industries concernées sont diverses : l'aéronautique et le spatial, le domaine militaire, les chantiers de bâtiment et de travaux publics, l'industrie navale, et l'industrie du nucléaire, notamment. La conformation des pièces métalliques envisagée peut être une soudure de deux pièces métalliques de même composition ou de compositions différentes, avec ou sans apport de matière. Ces procédés de conformation de matière métallique peuvent notamment être utilisés pour la première mise en forme d'une pièce unique ou de pièces fabriquées en petit nombre, ou pour la réparation de pièces très coûteuses et complexes à produire, pour par exemple sur des zones d'usures d'une partie de la pièce ou pour des réparations de fissures apparues au cours de la vie de la pièce. Différentes techniques de soudure et de fabrication additive sont connues, notamment les techniques de soudure focalisées utilisant un rayonnement laser, dans lesquelles un rayonnement laser est déplacé (relativement aux pièces) à l'interface des deux pièces à souder, créant un bain de fusion légèrement en amont du point d'impact et en aval de l'impact, qui se solidifie pour former la soudure, dans laquelle les matières des deux pièces ont coalescé.

Les exigences techniques imposent des qualités de soudure très élevées en particulier dans le domaine du nucléaire. Les imperfections ou défauts sont en grande partie éliminées par un nettoyage rigoureux des pièces avant soudage. Mais il est très important aussi d'apporter une protection gazeuse par inertage avec un gaz neutre qui est en général l'argon, ou l'azote, et qui protège le bain de fusion de l'oxydation par contact avec l'air, celui-ci contenant de l'oxygène et de l'humidité dont il convient de protéger le bain de fusion. Le gaz neutre est pulvérisé par une buse entourant le laser en direction du bain de fusion afin de faire diminuer localement l'humidité et le taux d'oxygène. Le principal inconvénient du gaz est qu'il se dilue rapidement dans l'air ambiant, phénomène amplifié par les forts gradients de température engendrés par la source laser de chaleur.

Les hautes densités de puissance et les hautes vitesses employées pour les procédés de soudage laser diminuent ainsi l'efficacité de la protection gazeuse du bain de fusion. Des boîtes ou chambres ou plus largement systèmes d'inertage, rigides ou souples, permettent de confiner le gaz de protection pour augmenter son efficacité. Elles assurent ainsi une bonne protection du bain de fusion mais doivent être adaptées à la géométrie de chaque pièce à souder ce qui les rend très voire trop contraignantes à mettre en œuvre dans beaucoup de configurations du fait de la complexité des géométries des soudures à réaliser. Les systèmes de chambre d'inertage sont complexes et il faut les créer au cas par cas. **Il** est nécessaire en particulier d'interfacer la boîte d'inertage avec la tête de soudage laser et les deux pièces à souder ce qui est complexe à mettre en œuvre.

Le soudage laser et la fabrication additive laser-fil pour des pièces de grandes dimensions en milieu ambiant restent au final peu pratiqués industriellement, et il y a peu de méthodes bien connues bien qu'il y ait une demande grandissante d'obtenir des vitesses de soudage plus grande. Ainsi, l'état de l'art offre peu de solutions pour les difficultés suivantes : assurer une protection du bain de fusion sur des ensembles mécaniques complexes ou les chambres ou boîtes d'inertage ne peuvent pas être installées, simplifier les procédures de soudage par faisceau laser et fabrication additive laser-fil, réduire les couts liés au soudage laser, et à la fabrication additive laser-fil dans les configurations spécifiques aux pièces de l'industrie nucléaire, diminuer les durées de préparation et d'intervention sur les zones de soudage en milieux ambiant comme les chantiers à ciel ouvert ou les usines, permettre le soudage laser, et la fabrication additive laser-fil sur des pièces de grandes dimensions à grandes vitesses sans chambre ou boîte d'inertage, augmenter de 10 à 20 % les performances de soudage laser et la qualité du bain de fusion, et permettre un inertage sur des systèmes robotisés à 5 ou 6 axes en chambre ou boîte d'inertage.

Une difficulté des procédés laser (avec ou sans apport de matière) en milieu ambiant est, comme on l'a dit, la protection gazeuse du bain de fusion, car il conditionne la qualité finale des assemblages soudés. De telles opérations de soudage en milieu ambiant, c'est-à-dire sans boîte ou chambre d'inertage, s'envisage en particulier pour l'industrie navale ou chantier du BTP, et on peut les effectuer dans une boîte ou chambre d'inertage à titre de précaution supplémentaire pour les industries encore plus exigeantes comme le nucléaire, l'aéronautique et l'aérospatial.

Les procédés de soudage à l'arc électrique, notamment les procédés TIG/MIG (Tungsten Inert Gas et Metal Inert Gaz) et électrode enrobé, sont largement utilisés dans l'industrie. Actuellement, les soudures complexes ou difficiles d'accès sont réalisées par d'autres procédés de soudage que le soudage laser. Le soudage à l'arc électrique utilise une électrode au tungstène - la soudure TIG - ou un fil électrode fusible. Quand l'électrode n'est pas fusible, ce qui est le cas de la soudure TIG, un fil d'apport ou baguette d'apport peut être utilisé pour additionner du métal aux pièces travaillées. Si l'électrode est fusible, ce qui peut être le cas de la soudure MIG, elle peut être avancée progressivement pour fournir un tel apport de matière métallique. On connait, dans le cadre de ces procédés de soudage à l'arc, la possibilité de travailler avec l'arc submergé, à savoir l'arc électrique sous un flux de poudre d'inertage. Il s'agit d'un procédé très spécifique, limité à la création d'un arc électrique entre un fil électrode auquel est appliqué un potentiel opposé à un autre potentiel appliqué aux pièces à souder, desquelles sont approchées jusqu'au contact l'extrémité du fil électrode sous le flux de poudre.

Mais les procédés de soudage TIG, MIG et électrodes enrobées restent lents, et les remplacer par un soudage par laser (avec ou sans apport de matière) ne nécessitant pas des boîtes d'inertage permettrait dans certains domaines de diminuer les temps de soudage, incluant la mise en place actuellement laborieuse des équipements nécessaires à l'inertage, et les coûts.

### Définition de l'invention

L'invention consiste à mettre en œuvre un procédé de soudure de deux pièces métalliques par fusion puis refroidissement, comprenant une application d'un rayonnement laser sur la matière à traiter, et un déplacement (relativement à la matière à traiter) progressif dudit rayonnement sur un chemin de traitement de la matière à traiter.

Ce procédé est particulier car en amont ou à l'aplomb du point d'impact du rayonnement, la matière à traiter est recouverte d'une poudre d'inertage, la poudre d'inertage étant retirée en aval de l'application du rayonnement après refroidissement du bain de fusion, le faisceau laser étant projeté à travers la poudre et focalisé sur la matière à traiter, à sa surface ou éventuellement légèrement en dessous.

Grâce à ces principes, qui consistent à faire traverser au rayon laser non focalisé une épaisseur de poudre d'inertage, d'avoir effectué la focalisation au fond de la couche de poudre, et d'attendre le refroidissement du bain de fusion pour retirer la poudre, on améliore grandement les techniques de soudure existantes et on gagne en productivité par rapport à des procédés n'utilisant pas de laser, ou à des procédés nécessitant la confection de chambre d'inertage spécifiques.

Un procédé de soudure de deux pièces métalliques par fusion puis refroidissement conformément à la présente invention est défini dans la revendication 1.

Les revendications dépendantes définissent des aspects particuliers de la présente invention.

De manière optionnelle et avantageuse,
- le rayonnement laser peut être appliqué et déplacé conjointement avec un fil dont l'extrémité est placée sous le rayonnement laser en sorte de constituer un apport de matière au niveau de l'impact du laser sur la base métallique de la matière à traiter, la base pouvant être unique ou composée de deux pièces à souder, sur laquelle il est appliqué
- les deux pièces métalliques peuvent être de même composition, ou de compositions différentes (même alliage, ou alliages différents)
- les pièces métalliques et plus largement la matière à traiter peuvent être en acier ou comprendre un acier
- le procédé peut être mis en œuvre avec ou sans boîte d'inertage comprenant un gaz d'inertage (argon, azote, hélium par exemple) pour protéger le bain de fusion, en plus de la poudre d'inertage
- la poudre peut être composée de 35 % d'un mélange de SiO₂ + Al₂O₃ et de 65 % CaF₂ + CaO + MgO pour le soudage par faisceau laser de deux plaques d'acier inoxydable X10CrMoVNb9.1, mais cela est un exemple parmi d'autres, la poudre étant par ailleurs adaptée à la nature du métal ou de l'alliage
- le faisceau laser peut être délivré par une source Nd-YAG, mais d'autres sources existent et peuvent être utilisées
- la poudre peut être déposée sous forme d'un flux lissé.

L'avantage de cette invention est, en matière de soudage, de deux ordres pour des résultats techniques et mécaniques identiques : Pour une épaisseur de soudage donnée, l'invention permet de diminuer la puissance laser nécessaire, et de diminuer les fumées de soudages, nocives pour l'environnement, et pour une puissance laser donnée, l'invention permet d'augmenter considérablement les épaisseurs de pièces pouvant être soudées.

### Liste des figures

La figure 1 est une représentation générale en coupe transversale d'une opération de soudage par laser dans une boîte d'inertage.
Les figures 2A et 2B sont des représentations en coupes longitudinale et transversale d'une opération de soudage selon l'invention.
La figure 3 est une représentation en coupe longitudinale d'une opération de fabrication additive laser-fil non couverte par la présente invention.

### Description détaillée

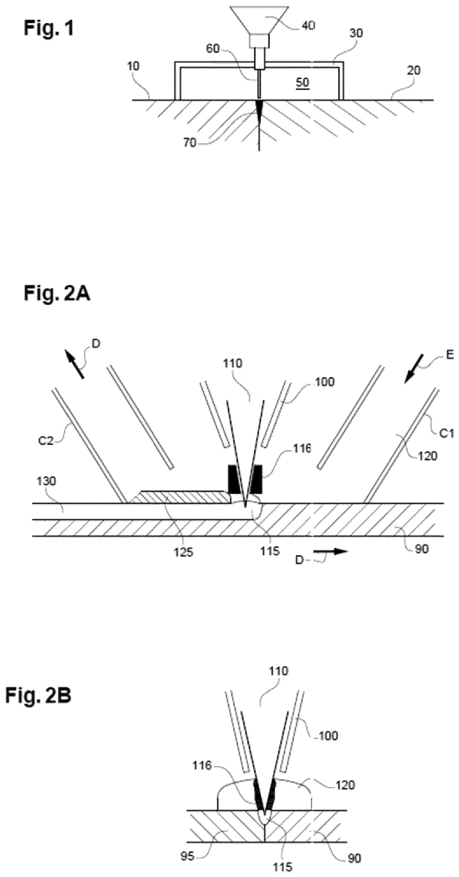

[Fig. 1] En figure 1, on a représenté, selon des principes connus deux pièces métalliques 10 et 20 en coupe, placées côte à côte, des faces latérales devant être soudées étant apposées l'une contre l'autre. Une boîte d'inertage 30 est placée au-dessus de la jonction entre les deux pièces métalliques 10 et 20, et un système d'insufflation de gaz y est reliée, en sorte de créer une atmosphère régulée. La source laser 40 est interfacée avec la boîte d'inertage 30 en sorte qu'elle surplombe la jonction entre les deux pièces métalliques 10 et 20. Le gaz 50 est insufflé dans le volume interne de la boîte d'inertage et le faisceau laser 60 est dirigé sur la jonction, qui entre en fusion et se constitue en soudure 70. Le bain de fusion transitoire est protégé de l'oxydation et de l'humidité par le gaz 50, typiquement de l'argon ou de l'azote. Le faisceau laser est déplacé transversalement au plan de la figure, le long de l'interface de jonction entre les pièces 10 et 20. Le déplacement du laser est relatif aux pièces : cela peut être les pièces qui sont déplacées vis-à-vis du laser plutôt que l'inverse, naturellement.

[Fig. 2A] En figure 2A, on a représenté un mode de réalisation de l'invention. La figure est, à gauche, une coupe avec, cette fois-ci, le sens du déplacement D du laser parallèle au plan de coupe. Encore, le déplacement du laser est relatif aux pièces : cela peut être les pièces qui sont déplacées vis-à-vis du laser plutôt que l'inverse, naturellement.

[Fig. 2B] En figure 2B, une coupe transversale du même procédé, avec la même position des éléments, est présentée, de manière à visualiser à la fois le faisceau laser et les deux pièces à souder.

Une seule pièce métallique 90 est visible en figure 2A, car la coupe est réalisée dans le plan de jonction des deux pièces, celles-ci étant mise au contact l'une de l'autre par deux faces planes, typiquement des bords d'aboutement. La deuxième pièce, référencée 95, est visible en figure 2B.

Conformément à la présente invention, les pièces à souder sont aboutées par des surfaces non planes, complémentaires néanmoins l'une de l'autre. La partie supérieure des surfaces d'aboutement est le chemin de progression du faisceau laser aux fins de la soudure, c'est-à-dire le traitement de la matière à conformer. Ce chemin est souvent rectiligne, mais il peut être curviligne si les surfaces d'aboutement ne sont pas planes. Au-dessus des pièces, dans le plan de jonction, on place la source laser dont on voie la buse 100, et à travers la buse 100 apparait le faisceau laser 110 qui est focalisé sur la surface des pièces métalliques (ou légèrement en dessous) et provoque la formation de bain de fusion 115 dans le métal, à la jonction des deux pièces. Mais avant d'atteindre les pièces métalliques, il est projeté à travers une poudre de granulés, sur un trajet de par exemple 5 à 8 mm dans la couche de poudre, le long duquel il n'est pas focalisé.

Selon l'invention, on a en effet mis en place une poudre 120 déposée dynamiquement en amont de l'impact du laser sur la jonction de pièces métalliques à souder par une conduite de dépôt C1, constituant une entrée E de poudre projetée sur les pièces métalliques, qui s'accumule pour former une couche qui peut être de 5 à 8 mm d'épaisseur selon la nature des matériaux utilisés. Le dépôt de poudre, effectué par la conduite de dépôt C1 est lissé par celle-ci, sur la surface, qui est essentiellement plane dans la zone de l'application du laser et a été disposée horizontalement, des pièces 90 et 95, ce qui permet la formation d'une couche de poudre uniforme. La poudre, dès qu'elle est présente sur le métal, est prête à assurer sa protection contre les gaz de l'atmosphère, en particulier l'eau et le dioxygène. Son épaisseur est adaptée à la vitesse de déplacement D : si le déplacement est lent, il faut plus d'épaisseur de poudre, jusqu'à éventuellement noyer le bas de la buse 100 dans la poudre 120.

Ainsi, la focalisation du laser 110 se produit au fond de la couche de poudre déposée quelques instants plus tôt et qui recouvre la jonction des deux pièces métalliques à l'endroit où le laser se déplace progressivement. La poudre, impactée par le laser dans sa portion non focalisée, entre en fusion également, et le métal entre en fusion sous une épaisseur de poudre en fusion. Au-dessus du bain de fusion de métal 115, la poudre fondue voire sublimée 116 est ainsi présente.

Le déplacement se poursuivant, les matériaux refroidissent en aval de l'impact courant du laser, la poudre fondue se solidifie en un laitier 125, et le métal fondu en la soudure ou cordon de soudure 130.

Une conduite d'aspiration C2, en aval de l'impact du laser, retire par l'effet d'une dépression D, la poudre et au moins une partie du laitier.

Dans un mode de réalisation, la poudre est composée de 35 % d'un mélange de SiO₂ + Al₂O₃ et de 65 % CaF₂ + CaO + MgO pour le soudage par faisceau laser de deux plaques d'acier inoxydable X10CrMoVNb9.1 (un acier difficile à souder, d'application à l'industrie nucléaire) de 11 mm d'épaisseur chacune avec un faisceau laser d'une puissance continue de 8 kW délivré par une source Nd-YAG.

La poudre est appliquée sous la forme d'un flux lissé et peut comprendre un mélange acide ou basique selon les indices de basicité couramment utilisés.

Deux types d'inertage ont été comparés : par pulvérisation d'argon et par flux de poudre. Pour une pénétration du bain de fusion dans la profondeur des pièces à souder identique, il est possible diminuer la puissance du faisceau laser de 8 kW à 6,3 kW à vitesse de déplacement égale. Cette diminution de puissance de tir du faisceau laser de plus de 20 % est considérable. Les analyses métallographiques réalisées sur ces soudures permettent de constater une grande qualité et pureté du bain de fusion après solidification. Il n'y a aucun défaut dans la soudure.

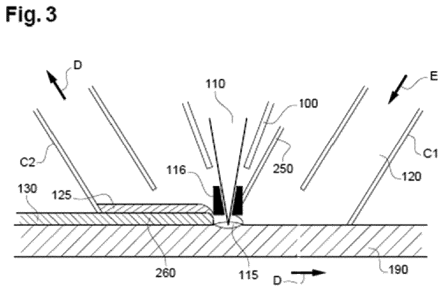

[Fig. 3] En figure 3, on a représenté une mise en œuvre du processus pour la soudure avec apport ou la fabrication additive laser-fil, aspect non couvert par la présente invention La figure est comme la figure 2A une coupe avec le sens du déplacement D du laser parallèle au plan de coupe. Une seule pièce métallique 190 peut être présente cette fois-ci, et la coupe est alors réalisée dans un plan dans lequel un ajout de matière va être réalisé- le plan du chemin du laser, sachant que ce chemin peut être courbe, auquel cas le plan est choisi localement - en surface de la pièce métallique 190. Mais la représentation de la figure 3 est également compatible avec la présence de deux pièces métalliques comme en figures 2A et 2B, et la formation d'une soudure avec apport de matière. Il rentre également dans le périmètre de la présente divulgation la possibilité de combiner simultanément soudure et fabrication additive.

Un fil d'apport 250 est placé(e) à l'emplacement visé par la source laser. Au-dessus de la pièce, dans le plan de dépôt (le plan de la figure), on place la source laser qui provoque la formation du bain de fusion 115 dans le métal d'apport et à la surface de la pièce métallique 190 (et de la deuxième pièce métallique le cas échéant), sur le trajet de l'ajout de matière à réaliser.

Selon la Figure 3, on a de plus mis en place par la conduite de dépôt C1 un flux de poudre 120 déposé dynamiquement en amont de l'impact du laser sur le trajet de la matière à déposer. Le dépôt, effectué par la conduite de dépôt C1 est lissé par celle-ci (la surface sur laquelle la poudre est déposée est plane dans la zone sur laquelle le laser est appliqué, ce qui permet la constitution de la couche de poudre, lissée). La poudre, dès qu'elle est présente sur le métal, assure sa protection contre les gaz de l'atmosphère, en particulier l'eau et le dioxygène.

La poudre, impactée par le faisceau laser avant la focalisation de celui-ci entre en fusion, et le métal du fil entre en fusion sous l'effet du faisceau laser qui le touche en son point focal ou à grande proximité de celui-ci, sous une épaisseur de poudre en fusion ou sublimée. Le métal de la surface, au moins de la pièce métallique 190 (et de la deuxième pièce métallique le cas échéant) entre également en fusion, puisque touché par le laser à son point de focalisation à la surface du métal ou en dessous légèrement.

Le déplacement se poursuivant, la poudre se solidifie partiellement en un laitier 125, et le métal fondu en la matière soudée et/ou ajoutée additivement, formant un cordon de soudure 260 et/ou un relief additionné 260 au-dessus de la surface de la pièce métallique 190. Comme en figure 2A, une conduite d'aspiration C2, en aval de l'impact du laser, retire la poudre et au moins une partie du laitier.

Une fois la confirmation des pièces terminées par les processus mentionnés ci-dessus et leur température revenue à la température ambiante, leurs surfaces peuvent être nettoyées par voie électrochimique.

La qualité des assemblages et pièces formées est hautement satisfaisante, avec des procédés ayant des performances accrues.

Le procédé s'applique à tous les métaux et alliages métalliques, parmi lesquels par exemple le zirconium ou les aciers ferritiques/martensitiques à activation réduite (RAFM).

A la place d'un dévidoir C1 en amont de la source laser, la poudre peut être déposée par une buse entourant la source laser et constituant un dévidoir de poudre, au droit, ou à l'aplomb de l'impact du laser sur la matière métallique à traiter.

Au final, l'invention consiste, dans le cadre de l'application d'un laser à noyer le bain de fusion sous un flux de poudre d'inertage dont la composition est adaptée aux métaux ou alliages à souder dans le cadre d'une soudure. Cette solution est adaptée au soudage laser avec ou sans apport de matière.

Elle peut optionnellement être mis en œuvre dans une chambre d'inertage, sous un gaz d'inertage, pour garantir encore plus la qualité de la soudure effectuée, par exemple pour les industries les plus demandeuses en la matière, comme le domaine nucléaire.

Elle permet de gagner du temps par rapport aux techniques connues, et/ou d'améliorer la qualité obtenue.

## Revendications

1. Procédé de soudure de deux pièces métalliques par fusion puis refroidissement, comprenant une application d'un rayonnement laser (110) , et un déplacement (D) progressif dudit rayonnement laser (110) à la jonction entre les deux pièces à souder (90, 95), **caractérisé en ce que** la matière à traiter est recouverte d'une poudre d'inertage (120), la poudre d'inertage (120) étant retirée en aval de l'application du rayonnement après refroidissement d'un bain de fusion (115) produit par ladite application du rayonnement, le faisceau laser étant projeté à travers la poudre et focalisé sur la matière à traiter les pièces étant apposées préalablement surface à souder contre surface à souder, les surfaces étant complémentaires l'une de l'autre.

2. Procédé de conformation de matière métallique selon la revendication 1, **caractérisé en ce que** les deux pièces métalliques (90, 95) sont de même composition.

3. Procédé de conformation de matière métallique selon l'une des revendications 1 à 2, **caractérisé en ce que** la matière à traiter comprend un acier.

4. Procédé de conformation de matière métallique selon l'une des revendications 1 à 3, **caractérisé en ce qu'**il est mis en œuvre avec ou sans boîte d'inertage comprenant un gaz d'inertage pour protéger le bain de fusion.

5. Procédé de conformation de matière métallique selon l'une des revendications 1 à 4, **caractérisé en ce que** le faisceau laser est délivré par une source Nd-YAG.

6. Procédé de conformation de matière métallique selon l'une des revendications 1 à 5, **caractérisé en ce que** la poudre est déposée sous forme d'un flux lissé.

## Patentansprüche

1. Verfahren zum Schweißen von zwei Metallwerkstücken durch Schmelzen und anschließender Abkühlung, umfassend ein Anlegen einer Laserstrahlung (110) und eine allmähliche Verschiebung (D) der Laserstrahlung (110) am Verbindungspunkt zwischen den zwei zu verschweißenden Werkstücken (90, 95), **dadurch gekennzeichnet, dass** das zu verarbeitende Material mit einem Inertisierungspulver (120) bedeckt ist, wobei das Inertisierungspulver (120) nach dem Anlegen der Laserstrahlung nach der Abkühlung eines Schmelzbades (115), das durch das Anlegen der Laserstrahlung erzeugt wird, entfernt wird, wobei das Laserstrahlenbündel durch das Pulver hindurch übertragen wird und auf das zu verarbeitende Material fokussiert wird, wobei die Werkstücke im Voraus Schweißfläche gegen Schweißfläche angebracht werden, wobei die Flächen komplementär zueinander sind.

2. Verfahren zur Gestaltung von Metallmaterial nach Anspruch 1, **dadurch gekennzeichnet, dass** die zwei Metallwerkstücke (90, 95) die gleiche Zusammensetzung aufweisen.

3. Verfahren zur Gestaltung von Metallmaterial nach einem der Ansprüche 1 bis 2, **dadurch gekennzeichnet, dass** das zu verarbeitende Material einen Stahl umfasst.

4. Verfahren zur Gestaltung von Metallmaterial nach einem der Ansprüche 1 bis 3, **dadurch gekennzeichnet, dass** es mit oder ohne Inertisierungskasten, der ein Inertisierungsgas zum Schutz des Schmelzbades umfasst, durchgeführt wird.

5. Verfahren zur Gestaltung von Metallmaterial nach einem der Ansprüche 1 bis 4, **dadurch gekennzeichnet, dass** das Laserstrahlenbündel von einer Nd-YAG-Quelle abgegeben wird.

6. Verfahren zur Gestaltung von Metallmaterial nach einem der Ansprüche 1 bis 5, **dadurch gekennzeichnet, dass** das Pulver in Form eines geglätteten Flusses abgelagert wird.

## Claims

1. Method for welding two metal workpieces by means of melting then cooling, comprising an application of laser radiation (110), and a progressive displacement (D) of the laser radiation (110) at the junction between the two workpieces (90, 95) to be welded, **characterized in that** the material to be processed is covered with an inerting powder (120), the inerting powder (120) being removed downstream of the application of the radiation after cooling of a melting bath (115) produced by the application of the radiation, the laser beam being projected through the powder and focused on the material to be processed, the workpieces being attached beforehand in a state surface to be welded against surface to be welded, the surfaces complementing each other.

2. Method for shaping metal material according to claim 1, **characterized in that** the two metal workpieces (90, 95) have the same composition.

3. Method for shaping metal material according to either claim 1 or 2, **characterized in that** the material to be processed comprises a steel.

4. Method for shaping metal material according to any one of claims 1 to 3, **characterized in that** it is implemented with or without an inerting box comprising an inerting gas in order to protect the melting bath.

5. Method for shaping metal material according to any one of claims 1 to 4, **characterized in that** the laser beam is provided by an Nd-YAG source.

6. Method for shaping metal material according to any one of claims 1 to 5, **characterized in that** the powder is deposited in the form of a smoothed flow.
